# EUROPÄISCHE PATENTSCHRIFT

(11) **EP 3 717 332 B1**
(45) Veröffentlichungstag und Bekanntmachung des Hinweises auf die Patenterteilung: **30.03.2022**
(21) Anmeldenummer: 18826963.3
(22) Anmeldetag: 29.11.2018
(51) Int. Cl.: B62D 5/00, B62D 6/00

(54) **VERFAHREN ZUR STEUERUNG EINES STEER-BY-WIRE-LENKSYSTEMS MIT ACTIVE RETURN**
METHOD FOR CONTROLLING A STEER-BY-WIRE STEERING SYSTEM WITH AN ACTIVE RETURN FUNCTION
PROCÉDÉ DE COMMANDE D'UN SYSTÈME DE DIRECTION PAR CÂBLE À RETOUR ACTIF

(30) Priorität: 01.12.2017 DE 102017128554
(43) Veröffentlichungstag der Anmeldung: 07.10.2020
(73) Patentinhaber: thyssenkrupp Presta AG, 9492 Eschen (LI); thyssenkrupp AG, 45143 Essen (DE)
(72) Erfinder: POLMANS, Kristof, 6464 Tarrenz (AT); ROHRMOSER, Manuel, 6712 Thüringen (AT)
(74) Vertreter: thyssenkrupp Intellectual Property GmbH
(86) Internationale Anmeldenummer: PCT/EP2018/082961
(87) Internationale Veröffentlichungsnummer: WO 2019/106070

(56) Entgegenhaltungen:
- DE-A1-102016 005 013

## Beschreibung

Die vorliegende Erfindung betrifft ein Verfahren zur Steuerung eines Steer-by-Wire-Lenksystems mit den Merkmalen des Oberbegriffs des Anspruchs 1 und ein Steer-by-Wire-Lenksystem mit den Merkmalen des Oberbegriffs des Anspruchs 12.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt. Eine mechanische Verbindung zu den Rädern ist nicht vorgesehen, sodass nach Betätigung des Lenkrads keine unmittelbare Kraft-Rückmeldung an den Fahrer übermittelt wird. Allerdings ist eine entsprechend angepasste Rückmeldung, beispielsweise beim Parken oder bei einer Geradeausfahrt, bei der ein der Fahrzeugreaktion angepasstes, je nach Fahrzeughersteller unterschiedliches Lenkmoment als Kraft-Rückmeldung gewünscht ist, vorgesehen. Bei einer Kurvenfahrt wirken Reaktionskräfte als Querkräfte auf das Lenkgetriebe, welche der Feedback-Aktuator in Form eines der Lenkrichtung entgegengesetzten Moments nachbildet. Der Fahrer erfährt ein dadurch vorgebbares Lenkgefühl. Um bei Steer-by-Wire-Lenkungen die Rückwirkungen der Straße auf das Lenkrad zu simulieren, ist es notwendig, am Lenkrad oder der Lenksäule einen Feedback-Aktuator (FBA) vorzusehen, welcher in Abhängigkeit von den gewünschten Rückwirkungen der Lenkhandhabe ein Lenkgefühl aufprägt. Eine Lenkradüberwachung kann vorgesehen sein, die feststellt, ob eine Fahreraktivität am Lenkrad vorliegt oder nicht. Dabei wird im Folgenden ein Zustand, in der der Fahrer das Lenkrad ergriffen hat, als Hands-On-Zustand, und ein Zustand, in der der Fahrer das Lenkrad nicht ergriffen hat, also eine Freihandfahrt, als Hands-Off-Zustand bezeichnet, was den in diesen technischen Bereichen verwendeten Begriffen entspricht.

Aus dem Stand der Technik, beispielsweise aus den Offenlegungsschriften DE 10 2007 039 332 A1 und DE 10 2011 002 997 A1 sind Verfahren zur Erkennung eines Hands-On/Off-Zustands bekannt. Ein Rückstellen des Lenkrads in eine neutrale Stellung, welcher einer Geradeausposition der Fahrzeugräder entspricht, wird dabei nicht berücksichtigt. Es kann daher vorkommen, dass sich in einem Hands-off-Zustand das Lenkrad zu schnell in eine Nullposition zurückdreht. Dies ist störend für den Fahrer und kann zu einem überschwingenden Lenkrad führen. Die Nullposition, die Geradeausposition und die neutrale Stellung des Lenkrads bezeichnen hierbei die gleiche Position und werden als Synonym verwendet.

In elektromechanischen Lenksystemen gibt es eine sogenannte Active Return Funktion. Diese verwendet einen Drehmomentsensor (TSU), um das Handmoment am Lenkrad zu messen. Das Rückstellen wird in Abhängigkeit des gemessenen Momentes verändert. Ein schnell rückstellendes Lenkrad, das eventuell zu einem überschwingenden Lenkrad führt, wird in elektromechanischen Lenksystemen durch die Mechanik gedämpft. In Steer-by-Wire Lenkungen muss die Active Return Funktion hingegen deutlich schneller und robuster funktionieren, um bspw. ein zu schnell rückstellendes Lenkrad zu dämpfen.

Aus DE 10 2016 005 013 A1 ist daher ein Steer-by-Wire-Lenksystem für Kraftfahrzeuge bekannt, bei dem bei einer Rückstellung des Lenkrads in die neutrale Position das am Lenkrad anliegende Lenkgefühl angepasst wird, wenn in einer Kurvenfahrt eine Hands-off Situation am Lenkrad ermittelt wird. Unter "angepasst" ist zu verstehen, dass über eine höhere einstellbare Reibung bzw. Dämpfung in Abhängigkeit der Fahrzeug- und Lenkwinkelgeschwindigkeit und der Lenkrichtung eine gleichmäßige Rückstellung ermöglicht wird und dem Fahrer damit ein möglichst natürliches Lenkgefühl bei erneuter Hands-On Situation bereitgestellt wird.

Es ist Aufgabe der vorliegenden Erfindung, ein verbessertes Verfahren zum Rückstellen des Lenkrads in eine neutrale Stellung für eine Steer-by-Wire Lenkung eines Kraftfahrzeuges anzugeben.

Diese Aufgabe wird von einem Verfahren zur Steuerung eines Steer-by-Wire-Lenksystems für Kraftfahrzeuge mit den Merkmalen des Anspruchs 1 und einem Steer-by-Wire-Lenksystems für Kraftfahrzeuge mit den Merkmalen des Anspruchs 12 gelöst. In den Unteransprüchen sind vorteilhafte Weiterbildungen der Erfindung genannt.

Demnach ist ein Verfahren zur Steuerung eines Steer-by-Wire-Lenksystems für Kraftfahrzeuge vorgesehen, umfassend einen auf die gelenkten Räder wirkenden, in Abhängigkeit eines Fahrerlenkwunsches elektronisch geregelten Lenksteller, einen Rückwirkungen der Straße auf ein Lenkrad in Form eines Rückstellmomentes übertragenden Feedback-Aktuator, und eine Feedback-Aktuator-Monitoreinheit, die den Feedback-Aktuator steuert, wobei eine Erkennungseinheit den Bedienzustand, ob eine Handberührung des Fahrers am Lenkrad vorliegt oder nicht, erkennt. Folgende Verfahrensschritte sind zur Berechnung eines resultierenden Rückstellmomentes des Lenkrads in eine definierte Position in Abhängigkeit des Bedienzustandes vorgesehen:
- Bestimmen eines Basis-Rückstellmoments für einen ersten Bedienzustand, in welchem eine Handberührung des Fahrers am Lenkrad vorliegt
- Bestimmen eines Hands-off-Rückstellmoments für einen zweiten Bedienzustand, in welchem keine Handberührung des Fahrers am Lenkrad vorliegt;
- Bestimmen einer Rückstellgeschwindigkeit des Lenkrads für den ersten Bedienzustand und für den zweiten Bedienzustand;
- Bestimmen des resultierenden Rückstellmoments anhand des Basis-Rückstellmoments oder des Hands-off-Rückstellmoments, wodurch sich das Lenkrad mit der bestimmten Rückstellgeschwindigkeit zur Drehung des Lenkrads in die definierte Position dreht.

Dadurch soll gewährleistet werden, dass das Lenkrad sowohl im Falle, wenn das Lenkrad vom Fahrer betätigt oder gegriffen wird, als auch wenn keine Handberührung am Lenkrad vorliegt, das Lenkrad nicht unkontrollierte Bewegungen durchführt, sondern mit einer für den Fahrer angenehmen Rückstellgeschwindigkeit in die definierte Position dreht. Bei der definierten Position des Lenkrads handelt es sich besonders bevorzugt um die neutrale Position des Lenkrads, welche der Geradeausposition der Fahrzeugräder entspricht.

Vorzugsweise wird das Basis-Rückstellmoment und/oder das Hands-off-Rückstellmoment anhand eines Modells bestimmt.

In einer bevorzugten Ausführungsform wird das Hands-off-Rückstellmoment mittels eines Lenkradgeschwindigkeitsreglers bestimmt.

Weiterhin ist erfindungsgemäß zur Bestimmung des resultierenden Rückstellmoments eine Gewichtungseinheit vorgesehen, welche im Fall des ersten Bedienzustands das Basis-Rückstellmoment höher gewichtet und im Fall des zweiten Bedienzustands das Hands-off-Rückstellmoment höher gewichtet.

In einer Ausführungsform sind folgende Verfahrensschritte vorgesehen:
- Bestimmen eines Basis-Rückstellmoments für den Fall, dass eine Handberührung am Lenkrad vorliegt, wobei zusätzlich zu dem Basis-Rückstellmoment eine Lenkungsreibung und eine erste Lenkungsdämpfung für den ersten Bedienzustand vorgesehen sind;
- Bestimmen einer zweiten Lenkungsdämpfung für den zweiten Bedienzustand;
- Bestimmen einer gewichteten Lenkungsdämpfung aus der ersten Lenkungsdämpfung und der zweiten Lenkungsdämpfung durch eine Gewichtung in einer Gewichtungseinheit, wobei die Gewichtung durch den von der Erkennungseinheit erkannten Bedienzustand bestimmt wird;
- Berechnen des resultierenden Rückstellmomentes mittels des Basis-Rückstellmomentes und der gewichteten Lenkungsdämpfung.

Das Lenkgefühl kann so an den Bedienzustand angepasst werden, um ein verbessertes Rückstellen zu gewährleisten.

Dabei ist es vorteilhaft, wenn in die Berechnung des resultierenden Rückstellmomentes die Lenkungsreibung in Form einer Lenkungshysterese einfließt.

In einer Ausführungsform wird die zweite Lenkungsdämpfung mittels eines Schätzers bestimmt, der Signale vom Feedback-Aktuator empfängt, welche dem Lenkwinkel und einem Drehmoment, bevorzugt einem durch den Fahrer auf das Lenkrad eingeleiteten Drehmoment, entsprechen. Dabei ist es vorteilhaft, wenn ein Minimalwert für die zweite Lenkungsdämpfung definiert wird, sodass das Lenkrad nicht unkontrolliert überschwingt und bis zu einer Geradeausposition zurückdreht.

In einer zweiten Ausführungsform wird die Rückstellgeschwindigkeit mittels mindestens einer vorabdefinierten Kennlinie erfolgt. Vorzugsweise ist die mindestens eine Kennlinie dreidimensional und weist eine Abhängigkeit vom Lenkwinkel und von einer Fahrzeuggeschwindigkeit auf. Dabei ist die mindestens eine Kennlinie bevorzugt eine Halbparabel.

Es ist vorteilhaft, wenn die Erkennungseinheit zur Erkennung des Bedienzustands folgende Schritte ausführt:
a) Ermitteln eines Frequenzspektrums von Bewegungssignalen, die von Sensoren des Feedback-Aktuators erfasst werden,
b) Analyse des Frequenzspektrums mit Bestimmung der Dämpfung von Amplituden vorgegebener Frequenzbereiche,
c) Schätzen eines Fahrerlenkmoments mittels eines geeigneten Beobachters des Feedback-Aktuators, eines Modells des Feedback-Aktuators und der Bewegungssignale.

Vorzugsweise benötigt die Feedback-Aktuator-Monitoreinheit nur den Lenkwinkel α und/oder ein auf das Lenkrad aufgebrachte Lenkmoment T_{Fahrer}zur Berechnung des Rückstellmomentes. Es wird daher kein Drehmomentsensor benötigt.

Weiterhin ist ein Steer-by-Wire-Lenksystem für Kraftfahrzeuge vorgesehen umfassend einen auf die gelenkten Räder wirkenden, in Abhängigkeit eines Fahrerlenkwunsches elektronisch geregelten Lenksteller, einen Rückwirkungen der Straße auf ein Lenkrad in Form eines Rückstellmomentes übertragenden Feedback-Aktuator, und eine Feedback-Aktuator-Monitoreinheit, die den Feedback-Aktuator steuert, wobei eine Erkennungseinheit den Bedienzustand, ob eine Handberührung des Fahrers am Lenkrad vorliegt oder nicht, erkennt, und wobei die Feedback-Aktuator-Monitoreinheit dazu eingerichtet ist, das zuvor beschriebene Verfahren auszuführen.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: ein Blockdiagramm einer Steuerung des Steer-by-Wire-Lenk-systems,
- Fig. 3:: ein Blockdiagramm der Ansteuerung des Feedback-Aktuators,
- Fig. 4:: ein detaillierteres Blockdiagramm der Ansteuerung des Feedback-Aktuators von Figur 3,
- Fig. 5: ein Blockdiagramm einer weiteren Ausführungsform der Ansteuerung des Feedback-Aktuators, sowie
- Fig. 6:: ein Diagramm des Verlaufs der Lenkradgeschwindigkeit aufgetragen gegen die Fahrzeuggeschwindigkeit.

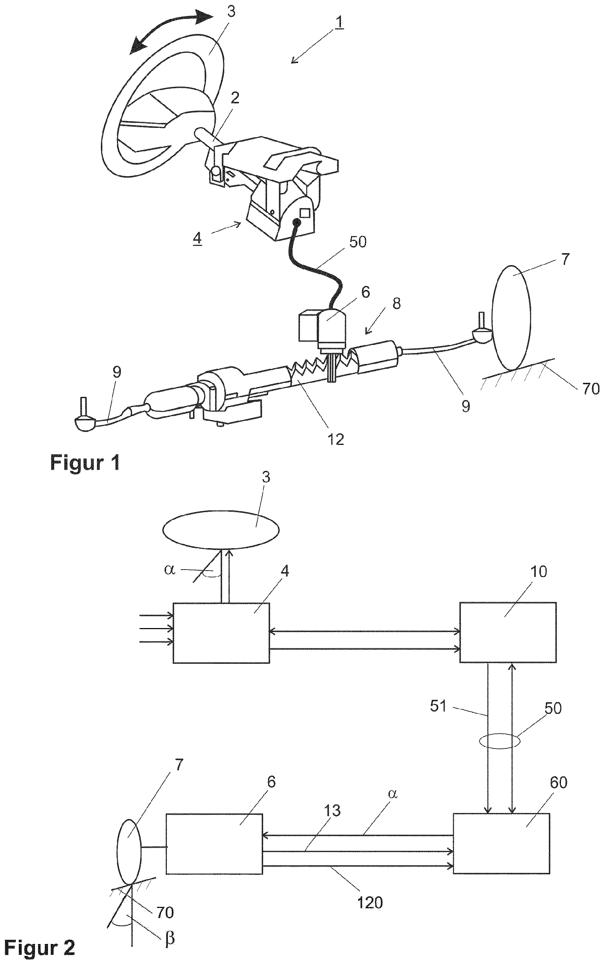

In der Figur 1 ist ein Steer-by-Wire-Lenksystem 1 gezeigt. An einer Lenkwelle 2 ist ein nicht dargestellter Drehwinkelsensor angebracht, welcher den durch

Drehen eines Lenkeingabemittels 3, welches im Beispiel als Lenkrad ausgebildet ist, aufgebrachten Fahrerlenkwinkel erfasst. Es kann aber zusätzlich auch ein Lenkmoment erfasst werden. Des Weiteren ist an der Lenkwelle 2 ein Feedback-Aktuator 4 angebracht, welcher dazu dient, die Rückwirkungen von der Fahrbahn 70 auf das Lenkrad 3 zu simulieren und somit dem Fahrer eine Rückmeldung über das Lenk- und Fahrverhalten des Fahrzeugs zu geben. Ein elektrischer Lenksteller 6 steuert die Stellung der gelenkten Räder 7. Der Lenksteller 6 wirkt über ein Lenkstangen-Lenkgetriebe 8, wie beispielsweise einem Zahnstangen-Lenkgetriebe, wobei die Zahnstange 12 über nicht dargestellte Kugelgelenke mit Spurstangen 9 und anderen Bauteilen mittelbar auf die gelenkten Räder 7 wirkt.

Figur 2 zeigt eine Steuerung des Feedback-Aktuators 4. Der Fahrerlenkwunsch wird über den vom Drehwinkelsensor gemessenen Drehwinkel α der Lenkwelle 2 über Signalleitungen an eine Feedback-Aktuator-Monitoreinheit 10 übertragen. Die Feedback-Aktuator-Monitoreinheit 10 überträgt den Fahrerlenkwunsch an eine Ansteuereinheit 60. Die Feedback-Aktuator-Monitoreinheit 10 übernimmt bevorzugt auch die Ansteuerung des Feedback-Aktuators 4. Die Feedback-Aktuator-Monitoreinheit 10 kann auch integral mit der Ansteuereinheit 60 ausgebildet sein. Die Ansteuereinheit 60 steuert in Abhängigkeit von dem Signal des Drehwinkelsensors sowie weiteren Eingangsgrößen den elektrischen Lenksteller 6 an.

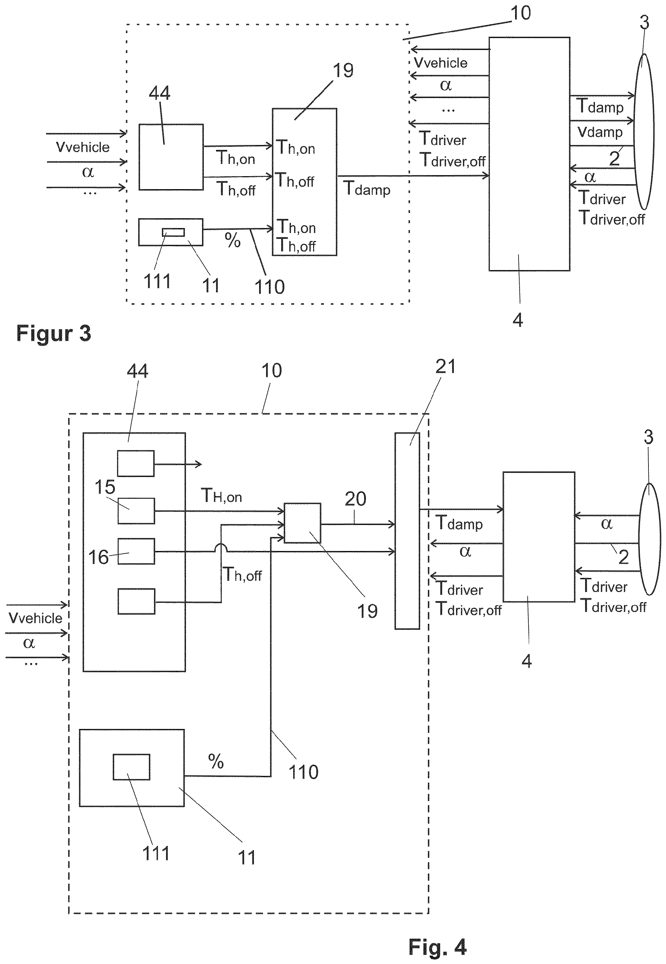

Der Feedback-Aktuator 4 empfängt Signale über die Signalleitung 50 unter anderem von dem Drehwinkelsensor, der den Drehwinkel α, die Lenkwinkelbeschleunigung und die Lenkwinkelgeschwindigkeit misst und speichert. Der Feedback-Aktuator 4 kommuniziert mit der Feedback-Aktuator-Monitoreinheit 10, die den Feedback-Aktuator 4 steuert. Die Feedback-Aktuator-Monitoreinheit 10 empfängt von der Ansteuereinheit 60 des Lenkstellers 6 den Ist-Radlenkwinkel β der gelenkten Räder 7, sowie weitere Größen, die die Ansteuereinheit 60 ermittelt hat. Die an einer Zahnstange 12 gemessene Zahnstangenposition 120 und weitere Fahrbahninformationen 13 werden an die Ansteuereinheit 60 weiter gegeben. Die Ansteuerungseinheit 60 empfängt weiterhin fahrerseitige Lenkbefehle 51, wie den Lenkwinkelstatus. Figur 3 stellt im Detail eine bevorzugte Ausführungsform der Ansteuerung des Feedback-Aktuators 4 dar. Die Feedback-Aktuator-Monitoreinheit 10 empfängt den Drehwinkelsensor gemessenen Drehwinkel α der Lenkwelle 2, das vom Fahrer aufgebrachte Drehmoment T_{driver} und die Fahrzeuggeschwindigkeit V_{vehicle}. Eine Erkennungseinheit 11 erkennt, ob ein Bedienzustand am Lenkrad 3 vorliegt. Der eine Bedienzustand ist dadurch definiert, dass eine Handberührung (Hands on) oder eine Handkraft T_{driver} des Fahrers am Lenkrad vorliegt, und der andere Bedienzustand ist dadurch definiert, dass keine Handberührung am Lenkrad anliegt (Hands off) T_{driver.off}. Der detektierte Bedienzustand 110 dient als Input für eine Gewichtungseinheit 19. Es wird ein modellbasierter Fahrerlenkmomentschätzer 111 verwendet, der die Bestimmung des Bedienzustands (Hands On/Off) anhand eines geschätzten Fahrerlenkmoments vornimmt.

Dazu sind folgende Schritte vorgesehen:
a) Ermitteln eines Frequenzspektrums von Bewegungssignalen, die von Sensoren des Feedback-Aktuators erfasst werden,
b) Analyse des Frequenzspektrums mit Bestimmung der Dämpfung von Amplituden vorgegebener Frequenzbereiche,
c) Schätzen eines Fahrerlenkmoments mittels eines geeigneten Beobachters des Feedback-Aktuators, eines Modells des Feedback-Aktuators und der Bewegungssignale.

Der Fahrlenkmomentschätzer 111 empfängt Signale vom Feedback-Aktuator 4, die ein am Feedback-Aktuator anliegenden Lenkwinkel α und ein Drehmoment repräsentieren. Der vom Feedback-Aktuator mittels des Drehwinkelsensors gemessene Lenkwinkel und das mittels des Drehmomentsensors gemessene Drehmoment stellen somit die Eingangsgrößen für den Schätzer 111 dar. Der Schätzer 111 schätzt aus diesen Messwerten ein Lenkmoment des Fahrers bzw. ein Fahrerlenkmoment, welches der Fahrer auf das Lenkrad aufbringt. Dazu verwendet der Schätzer ein Modell des Feedback-Aktuators und einen Kalman-Filter, als Beobachter. Als Input für das Zustands-Modell des Feedback-Aktuators werden unter anderem folgende physikalische Eigenschaften berücksichtigt: die Trägheit, Dämpfung/Reibung, Steifigkeit, Ungleichförmigkeit und Totzeit des Systems. Zusätzlich zu dem geschätzten Fahrerlenkmoment werden aus dem vom Feedback-Aktuator gemessenen Lenkwinkel und Drehmoment mittels eines Filters die Dämpfung von Amplituden vorbestimmter Frequenzbereiche bestimmt. Umfasst der Fahrer das Lenkrad, so werden aufgrund des neuen mechanischen Gesamtsystems und der veränderten Dämpfungseigenschaften Vibrationen zum Teil geschluckt. Die Frequenzspektren des ungegriffenen Lenkrads unterscheiden sich charakteristisch von denen des gegriffenen Lenkrads. Der Unterschied zwischen Hands-on und Hands-off Zustand ist somit im Frequenzspektrum der gemessenen Sensorsignale des Feedback-Aktuators sichtbar.

Falls die im Fahrbetrieb auftretenden Vibrationen für die Bestimmung der Dämpfungen der Amplituden in den vorbestimmten Frequenzbereichen nicht ausreichen, wird zusätzlich ein Testsignal in einer bestimmten Intensität und Amplitude mittels des Feedback-Motors in den Feedback-Aktuator eingeleitet und eine symmetrische Schwingung am Lenkrad erzeugt. Daraufhin wird wiederrum anhand des geschätzten Fahrerlenkmoments und mittels Frequenzanalyse eines Filters eine Beeinflussung des Feedback-Aktuators durch eine Berührung des Lenkrads erkannt und damit der aktuelle Bedienzustand (Hands-On/-Off) bestimmt.

Die Feedback-Aktuator-Monitoreinheit 10 berechnet ein Rückstellmoment T_{damp} das der Feedback-Aktuator 4 auf die Lenkwelle 2 zur Bereitstellung eines Lenkgefühls überträgt.

Der vom Fahrer mit einer definierten Lenkwinkelgeschwindigkeit aufgebrachte Lenkwinkel α und/oder ein auf das Lenkrad 3 aufgebrachte Lenkmoment T_{driver} wird gemessen. Zusätzlich werden weitere Parameter, wie beispielsweise die Fahrzeuggeschwindigkeit v_{vehicle} oder die Reibung ermittelt. Es ist auch denkbar,

Parameter des Lenkstellers zu verwenden, wie beispielsweise auf das Fahrzeug wirkende Seitenkräfte, Rad-, Zahnstangenposition usw. Anhand dieser Parameter wird der Zustand des Fahrzeugs ermittelt (Geradeausfahrt, Kurvenfahrt, Ein-/Ausparkvorgang). Anschließend wird mittels der Erkennungseinheit 11 bestimmt, ob ein Hands-On/Off-Zustand am Lenkrad vorliegt.

Zur Bestimmung des resultierenden Rückstellmoments T_{damp} wird der detektierte Bedienzustand 110 als prozentualer Anteil an die Gewichtungseinheit 19 übermittelt. Zwischen 0% und 50% liegt dabei ein Hands-off Zustand vor, während zwischen 51% und 100% ein Hands-On Zustand am Lenkrad vorliegt.

Ein Lenkgefühlmodell 44 empfängt Signale vom Feedback-Aktuator, welche dem Lenkwinkel α und einem Drehmoment entsprechen, und bestimmt ein Basis-Rückstellmoment T_{H,on} für den ersten Bedienzustand und ein Hands-off-Rückstellmoment T_{H,off} für den zweiten Bedienzustand. Somit passt das Lenkgefühlmodell 44 das resultierende Rückstellmoment T_{damp} und damit das Lenkgefühl an, sodass ein "ideales" Rückstellen erreicht wird. Dabei wird eine kritische Dämpfung (Minimaldämpfung) definiert, sodass das Lenkrad nicht unkontrolliert überschwingt, sondern sich bis zu dem Zentriermoment bzw. bis zur Geradeausposition zurückdreht. Das Lenkrad dreht sich bei der kritischen Dämpfung mit der maximal möglichen Geschwindigkeit zurück, ohne dass es überschwingt. Andere Lenkgefühlparameter können ebenfalls angepasst werden.

Das Lenkgefühlmodell 44 übermittelt die Rückstellmomente an die Gewichtungseinheit 19, welche in Abhängigkeit des detektierten Bedienzustands 110 das Basis-Rückstellmoment oder das Hands-off-Rückstellmoment höher gewichtet. Das höher gewichte Rückstellmoment wird als resultierendes Rückstellmoment T_{damp} in einen nicht dargestellten Motor des Feedback-Aktuators 4 eingeleitet, welcher über Rückstellkräfte das Lenkrad zurück mit einer definierten Rückstellgeschwindigkeit v_{damp} in eine Geradeausposition bringt, wobei das Zentriermoment für den Fahrer am Lenkrad spürbar ist. Eine ideale Rückstellgeschwindigkeit v_{damp} des Lenkrads in Abhängigkeit verschiedener Fahreigenschaften (Fahrzeuggeschwindigkeit, Lenkwinkel usw.) wird vorab mit Hilfe von mindestens einer dreidimensionalen Kennlinie definiert, wobei die mindestens eine Kennlinie eine Abhängigkeit vom Lenkwinkel und von der Fahrzeuggeschwindigkeit aufweist. Die ermittelte Rückstellgeschwindigkeit v_{damp} wird zunächst an den Feedback-Aktuator 4 und anschließend an das Lenkrad übermittelt. Figur 4 zeigt eine detaillierte Ausführung der Ausführungsform von Figur 3 der Ansteuerung des Feedback-Aktuators 4. Zur Berechnung eines Rückstellmoments des Lenkrads im Hands-On-Zustand wird in dem Modell 44 die Basis-Rückstellung T_{H,on}, welche das Basisrückstellmoment des Feedback-Aktuators 4 darstellt, bestimmt. Die Basis-Rückstellung T_{H,on} ist das nach herkömmlichen Methoden berechnete Rückstellmoment, das der Feedback-Aktuator 4 aufbringen soll. Um dem Fahrer bei einer Steer-by-Wire-Lenkung im Hands-On-Zustand das Gefühl einer konventionellen Lenkung zu vermitteln, weist das Lenkmodell 44 zusätzlich eine Lenkungsdämpfung 15 auf, die heftige oder abrupte Lenkreaktionen und Lenkbewegungen dämpft. Zudem ist eine Lenkungshysterese 16 (Lenkmoment-Lenkwinkel) in dem Modell 44 vorgesehen, die die Lenkungsreibung bestimmt. Im Falle eines Hands-Off-Zustands wird ein für diesen Zustand "ideales" Hands-Off Rückstellmoment T_{H,off} generiert. Ein Schätzer empfängt Signale vom Feedback-Aktuator, welche dem Lenkwinkel α und einem Drehmoment entsprechen und passt das Rückstellmoment und damit das Lenkgefühl an, sodass ein "ideales" Rückstellen erreicht wird. Dabei wird eine kritische Dämpfung (Minimaldämpfung) definiert, sodass das Lenkrad nicht unkontrolliert überschwingt, sondern sich bis zu dem Zentriermoment bzw. bis zur Geradeausposition zurückdreht. Das Lenkrad dreht sich bei der kritischen Dämpfung mit der maximal möglichen Geschwindigkeit zurück, ohne dass es überschwingt. Andere Lenkgefühlparameter können ebenfalls angepasst werden.

Es ist weiterhin eine Gewichtungseinheit 19 vorgesehen, die mittels einer gewichteten Mittelwertfunktion eine Gewichtung zwischen der Dämpfung im Hands-On-Zustand und der Dämpfung im Hands-Off-Zustand vornimmt. Die Gewichtung wird dabei durch den Hands-On/Off Bedienzustand 110 bestimmt. Die gewichtete Dämpfung 20 wird auf das Basis-Rückstellmoment T_{H,on} und das Hands-Off-Rückstellmoment T_{H,off} in einem Summierer 21 angewendet. Zudem fließt in den Summierer 21 die Lenkungshysterese 16 ein. Der Ausgangswert des Summierers 21 ist das zur Ansteuerung des Feedback-Aktuators verwendete resultierende Rückstellmoment T_{damp}.

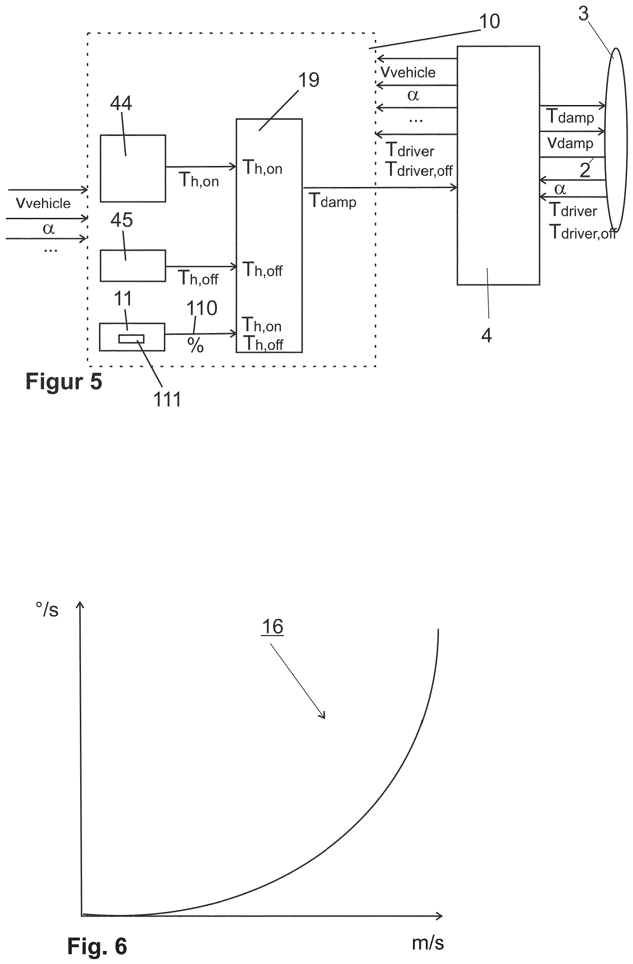

Figur 5 zeigt eine weitere bevorzugte Ausführungsform der Ansteuerung des Feedback-Aktuators 4. Das Basis-Rückstellmoment T_{H,on} wird mittels des Lenkgefühlmodells 44 bestimmt und das Hands-off-Rückstellmoment T_{H,off} wird über einen Lenkradgeschwindigkeitsregler 45 bestimmt. Über die Ermittlungseinheit 11 wird der prozentuale Anteil des Bedienzustands, wie oben beschrieben, ermittelt. Liegt keine Handberührung am Lenkrad 3 vor, gewichtet die Gewichtungseinheit 19 den Lenkradgeschwindigkeitsregler 45 höher. Der Lenkradgeschwindigkeitsregler 45 vergleicht die aktuell gemessene Lenkradgeschwindigkeit mit der Kennlinie und gewichtet diese entsprechend höher, sodass das gewollte Hands-off-Rückstellmoment T_{H,off} realisiert wird. Die Kennlinie kann beispielsweise eine Halbparabel sein, wie in Fig.6 dargestellt. Das höher gewichtete Hands-Off-Rückstellmoment wird als resultierendes Rückstellmoment T_{damp} in einen nicht dargestellten Motor des Feedback-Aktuators 4 eingeleitet, welcher über Rückstellkräfte das Lenkrad zurück mit einer definierten Rückstellgeschwindigkeit v_{damp} in eine Geradeausposition bringt. Liegt eine Handberührung am Lenkrad vor, wird das über das Lenkgefühlmodell erzeugte Basis-Rückstellmoment höher gewichtet und als resultierendes Rückstellmoment an den Feedback-Aktuator weitergegeben.

## Patentansprüche

1. Verfahren zur Steuerung eines Steer-by-Wire-Lenksystems (1) für Kraftfahrzeuge umfassend einen auf die gelenkten Räder (7) wirkenden, in Abhängigkeit eines Fahrerlenkwunsches elektronisch geregelten Lenksteller (6), einen Rückwirkungen der Straße (70) auf ein Lenkrad (3) in Form eines Rückstellmomentes übertragenden Feedback-Aktuator (4), und eine Feedback-Aktuator-Monitoreinheit (10), die den Feedback-Aktuator (4) steuert, wobei eine Erkennungseinheit (11) den Bedienzustand, ob eine Handberührung des Fahrers am Lenkrad vorliegt oder nicht, erkennt, wobei folgende Verfahrensschritte vorgesehen sind:
• Bestimmen eines Basis-Rückstellmoments (T_{H,on}) für einen ersten Bedienzustand, in welchem eine Handberührung des Fahrers am Lenkrad vorliegt;
• Bestimmen eines Hands-off-Rückstellmoments T_{H,off}) für einen zweiten Bedienzustand, in welchem keine Handberührung des Fahrers am Lenkrad (3) vorliegt;
• Bestimmen einer Rückstellgeschwindigkeit (v _{damp}) des Lenkrads (3) für den ersten Bedienzustand und für den zweiten Bedienzustand;
**dadurch gekennzeichnet, dass** folgende Verfahrensschritte zur Berechnung eines resultierenden Rückstellmomentes (T_{damp}) des Lenkrads (3) in eine definierte Position in Abhängigkeit des Bedienzustandes vorgesehen sind:
• Bestimmen des resultierenden Rückstellmomentes (T_{damp}) anhand des Basis-Rückstellmomentes (T_{H,on}) oder des Hands-off-Rückstellmoments (T_{H,off}), wodurch sich das Lenkrad mit der bestimmten Rückstellgeschwindigkeit (v _{damp}) in die definierte Position dreht,
wobei zur Bestimmung des resultierenden Rückstellmoments (T_{damp}) eine Gewichtungseinheit (19) vorgesehen ist, welche im Fall des ersten Bedienzustandes das Basis-Rückstellmoment (T_{H,on}) höher gewichtet und im Fall des zweiten Bedienzustands das Hands-off-Rückstellmoment (T_{H,off}) höher gewichtet.

2. Verfahren nach Anspruch 1, **dadurch gekennzeichnet, dass** das Basis-Rückstellmoment (T_{H,on}) und/oder das Hands-off-Rückstellmoment (T_{H,off}) anhand eines Modells (44) bestimmt wird.

3. Verfahren nach Anspruch 1, **dadurch gekennzeichnet, dass** das Hands-off-Rückstellmoment (T_{H,off}) mittels eines Lenkradgeschwindigkeitsreglers (45) bestimmt wird.

4. Verfahren nach einem der vorhergehenden Ansprüche, **dadurch gekennzeichnet, dass** folgende Verfahrensschritte vorgesehen sind:
• Bestimmen eines Basis-Rückstellmoments (T_{H,on}) für den Fall, dass eine Handberührung am Lenkrad vorliegt, wobei zusätzlich zu dem Basis-Rückstellmoment (T_{H,on}) eine Lenkungsreibung (16) und eine erste Lenkungsdämpfung (15) für den ersten Bedienzustand vorgesehen sind;
• Bestimmen einer zweiten Lenkungsdämpfung (17) für den zweiten Bedienzustand;
• Bestimmen einer gewichteten Lenkungsdämpfung (20) aus der ersten Lenkungsdämpfung (15) und der zweiten Lenkungsdämpfung (17) durch eine Gewichtung in einer Gewichtungseinheit (19), wobei die Gewichtung durch den von der Erkennungseinheit (11) erkannten Bedienzustand bestimmt wird;
• Berechnen des resultierenden Rückstellmomentes (T_{damp}) mittels des Basis-Rückstellmomentes (T_{H,on}) und der gewichteten Lenkungsdämpfung (20).

5. Verfahren nach Anspruch 4, **dadurch gekennzeichnet, dass** in die Berechnung des resultierenden Rückstellmomentes (T_{damp}) die Lenkungsreibung (16) in Form einer Lenkungshysterese einfließt.

6. Verfahren nach Anspruch 4 oder 5, **dadurch gekennzeichnet, dass** die zweite Lenkungsdämpfung (17) mittels eines Schätzers bestimmt wird, der Signale vom Feedback-Aktuator (4) empfängt, welche dem Lenkwinkel (a) und einem Drehmoment (T_{Fahrer}) entsprechen.

7. Verfahren nach Anspruch 6, **dadurch gekennzeichnet, dass** ein Minimalwert für die zweite Lenkungsdämpfung (17) definiert wird, sodass das Lenkrad (3) bis zu einer Geradeausposition zurückdreht.

8. Verfahren nach einem der vorhergehenden Ansprüche, **dadurch gekennzeichnet, dass** die Bestimmung der Rückstellgeschwindigkeit (v_{damp}) mittels mindestens einer vorabdefinierten Kennlinie erfolgt.

9. Verfahren nach Anspruch 8, **dadurch gekennzeichnet, dass** die mindestens eine Kennlinie dreidimensional ist und eine Abhängigkeit vom Lenkrad-Lenkwinkel (a) und von einer Fahrzeuggeschwindigkeit (v_{Fahrz}) aufweist.

10. Verfahren nach einem der vorhergehenden Ansprüche, **dadurch gekennzeichnet, dass** die Erkennungseinheit (11) zur Erkennung des Bedienzustands folgende Schritte ausführt:
a) Ermitteln eines Frequenzspektrums von Bewegungssignalen, die von Sensoren des Feedback-Aktuators (4) erfasst werden,
b) Analyse des Frequenzspektrums mit Bestimmung der Dämpfung von Amplituden vorgegebener Frequenzbereiche,
c) Schätzen eines Fahrerlenkmoments mittels eines geeigneten Beobachters des Feedback-Aktuators, eines Modells des Feedback-Aktuators (4) und der Bewegungssignale.

11. Verfahren nach einem der vorhergehenden Ansprüche, **dadurch gekennzeichnet, dass** die Feedback-Aktuator-Monitoreinheit den Lenkwinkel (a) und/oder ein auf das Lenkrad aufgebrachtes Lenkmoment (T_{Fahrer}) zur Berechnung des Rückstellmomentes benötigt.

12. Steer-by-Wire-Lenksystem (1) für Kraftfahrzeuge umfassend einen auf die gelenkten Räder (7) wirkenden, in Abhängigkeit eines Fahrerlenkwunsches elektronisch geregelten Lenksteller (6), einen Rückwirkungen der Straße (70) auf ein Lenkrad in Form eines Rückstellmomentes übertragenden Feedback-Aktuator (4), und eine Feedback-Aktuator-Monitoreinheit (10), die den Feedback-Aktuator (4) steuert, wobei eine Erkennungseinheit (11) den Bedienzustand, ob eine Handberührung des Fahrers am Lenkrad vorliegt oder nicht, erkennt, **dadurch gekennzeichnet, dass** die Feedback-Aktuator-Monitoreinheit (10) dazu eingerichtet ist, das Verfahren nach einem der vorhergehenden Ansprüche 1 bis 11 auszuführen.

## Claims

1. A method for controlling a steer-by-wire steering system (1) for motor vehicles comprising a steering actuator (6) which acts on the steered wheels (7) and is regulated electronically in a manner which is dependent on a driver's steering request, a feedback actuator (4) which transmits feedback effects of the road (70) to a steering wheel (3) in the form of a self-aligning torque, and a feedback actuator monitoring unit (10) which controls the feedback actuator (4), wherein a detection unit (11) detects the operating state of whether there is hand contact by the driver on the steering wheel or not, wherein the following method steps are provided:
• determining of a base self-aligning torque (T_{H,on}) for a first operating state, in which there is hand contact by the driver on the steering wheel;
• determining of a hands-off self-aligning torque (T_{H,off}) for a second operating state, in which there is no hand contact by the driver on the steering wheel (3);
• determining of a self-aligning speed (v _{damp}) of the steering wheel (3) for the first operating state and for the second operating state;
**characterized in that** the following method steps are provided for the calculation of a resulting self-aligning torque (T_{damp}) of the steering wheel (3) into a defined position in a manner which is dependent on the operating state:
• determining of the resulting self-aligning torque (T_{damp}) on the basis of the base self-aligning torque (T_{H,on}) or the hands-off self-aligning torque (T_{H,off}), as a result of which the steering wheel rotates at the defined self-aligning speed (v _{damp}) into the defined position,
wherein for the determination of the resulting self-aligning torque (T_{damp}), a weighting unit (19) is provided which gives more weight to the base self-aligning torque (T_{H,on}) in the case of the first operating state and gives more weight to the hands-off self-aligning torque (T_{H,off}) in the case of the second operating state.

2. The method as claimed in claim 1, **characterized in that** the base self-aligning torque (T_{H,on}) und/or the hands-off self-aligning torque (T_{H,off}) is determined on the basis of a model (44).

3. The method as claimed in claim 1, **characterized in that** the hands-off-self-aligning torque (T_{H,off}) is determined by means of a steering wheel speed regulator (45).

4. The method as claimed in one of the preceding claims, **characterized in that** the following method steps are provided:
• determining of a base self-aligning torque (T_{H,on}) for the case where there is hand contact on the steering wheel, wherein a steering friction (16) and a first steering damping action (15) are provided for the first operating state in addition to the base self-aligning torque (T_{H,οn});
• determining of a second steering damping action (17) for the second operating state;
• determining of a weighted steering damping action (20) from the first steering damping action (15) and the second steering damping action (17) by way of a weighting operation in a weighting unit (19), the weighting being determined by way of the operating state which is detected by the detection unit (11);
• calculating of the resulting self-aligning torque (T_{damp}) by means of the base self-aligning torque (T_{H,on}) and the weighted steering damping action (20).

5. The method as claimed in claim 4, **characterized in that** the steering friction (16) in the form of a steering hysteresis feeds into the calculation of the resulting self-aligning torque (T_{damp}).

6. The method as claimed in claim 4 or 5, **characterized in that** the second steering damping action (17) is determined by means of an estimator which receives signals from the feedback actuator (4), which signals correspond to the steering angle (α) and a torque (T_{driver}).

7. The method as claimed in claim 6, **characterized in that** a minimum value for the second steering damping action (17) is defined, with the result that the steering wheel (3) turns back as far as a straight ahead position.

8. The method as claimed in one of the preceding claims, **characterized in that** the self-aligning speed (v _{damp}) takes place by means of at least one predefined characteristic curve.

9. The method as claimed in claim 8, **characterized in that** the at least one characteristic curve is three-dimensional and has a dependence on the steering wheel steering angle (α) and on a vehicle speed (v_{vehicle}).

10. The method as claimed in one of the preceding claims, **characterized in that** the detection unit (11) for the detection of the operating state carries out the following steps:
a) determining of a frequency spectrum of movement signals which are detected by sensors of the feedback actuator (4),
b) analyzing of the frequency spectrum by way of determining of the damping action of amplitudes of predefined frequency ranges,
c) estimating of a driver's steering torque by means of a suitable observer of the feedback actuator, a model of the feedback actuator (4) and the movement signals.

11. The method as claimed in one of the preceding claims, **characterized in that** the feedback actuator monitoring unit requires the steering angle (α) and/or a steering torque (T_{driver}) which is applied to the steering wheel for the calculation of the self-aligning torque.

12. A steer-by-wire steering system (1) for motor vehicles comprising a steering actuator (6) which acts on the steered wheels (7) and is regulated electronically in a manner which is dependent on a driver's steering request, a feedback actuator (4) which transmits feedback effects of the road (70) to a steering wheel in the form of a self-aligning torque, and a feedback actuator monitoring unit (10) which controls the feedback actuator (4), wherein a detection unit (11) detects the operating state of whether there is hand contact by the driver on the steering wheel or not, **characterized in that** the feedback actuator monitoring unit (10) is set up to carry out the method as claimed in one of the preceding claims 1 to 11.

## Revendications

1. Procédé de commande d'un système de direction à commande par câble (1) pour véhicules automobiles, comprenant un régulateur de direction (6) régulé de manière électronique en fonction d'un souhait de direction du conducteur et agissant sur les roues directrices (7), un actionneur à rétroaction (4) transmettant des réactions de la route (70) sur un volant (3) sous la forme d'un couple de rappel, et une unité de surveillance d'actionneur à rétroaction (10) qui commande l'actionneur à rétroaction (4), une unité d'identification (11) identifiant l'état de maniement, c'est-à-dire si un contact des mains du conducteur sur le volant est avéré ou non, les étapes de procédé suivantes étant prévues, consistant à :
• déterminer un couple de rappel de base (T_{H,on}) pour un premier état de maniement dans lequel un contact des mains du conducteur sur le volant est avéré ;
• déterminer un couple de rappel mains libres (T_{H,off}) pour un deuxième état de maniement dans lequel aucun contact des mains du conducteur sur le volant (3) n'est donné ;
• déterminer une vitesse de rappel (v_{damp}) du volant (3) pour le premier état de maniement et pour le deuxième état de maniement ;
**caractérisé en ce que** les étapes de procédé suivantes sont prévues pour calculer un couple de rappel résultant (T_{damp}) du volant (3) vers une position définie en fonction de l'état de maniement, consistant à :
• déterminer le couple de rappel résultant (T_{damp}) à l'aide du couple de rappel de base (T_{H,on}) ou du couple de rappel mains libres (T_{H,off}), de sorte que le volant tourne à la vitesse de rappel déterminée (v_{damp}) vers la position définie,
dans lequel, pour déterminer le couple de rappel résultant (T_{damp}), une unité de pondération (19) est prévue qui applique un poids supérieur au couple de rappel de base (T_{H,on}) dans le cas du premier état de maniement, et applique un poids supérieur au couple de rappel mains libres (T_{H,off}) dans le cas du deuxième état de maniement.

2. Procédé selon la revendication 1, **caractérisé en ce que** le couple de rappel de base (T_{H,on}) et/ou le couple de rappel mains libres (T_{H,off}) sont déterminés à l'aide d'un modèle (44).

3. Procédé selon la revendication 1, **caractérisé en ce que** le couple de rappel mains libres (T_{H,off}) est déterminé au moyen d'un régulateur de vitesse de volant (45) .

4. Procédé selon l'une quelconque des revendications précédentes, **caractérisé en ce que** les étapes de procédé suivantes sont prévues, consistant à :
• déterminer un couple de rappel de base (T_{H,on}) pour le cas où un contact des mains sur le volant est avéré, dans lequel, en plus du couple de rappel de base (T_{H,on}), une friction de direction (16) et un premier amortissement de direction (15) sont prévus pour le premier état de maniement ;
• déterminer un deuxième amortissement de direction (17) pour le deuxième état de maniement ;
• déterminer un amortissement de direction pondéré (20) à partir du premier amortissement de direction (15) et du deuxième amortissement de direction (17) par une pondération dans une unité de pondération (19), la pondération étant déterminée par l'état de maniement identifié par l'unité d'identification (11) ;
• calculer le couple de rappel résultant (T_{damp}) au moyen du couple de rappel de base (T_{H,on}) et de l'amortissement de direction pondéré (20).

5. Procédé selon la revendication 4, **caractérisé en ce que** la friction de direction (16) entre dans le calcul du couple de rappel résultant (T_{damp}) sous la forme d'une hystérèse de direction.

6. Procédé selon la revendication 4 ou 5, **caractérisé en ce que** le deuxième amortissement de direction (17) est déterminé au moyen d'un estimateur qui reçoit des signaux de l'actionneur à rétroaction (4) qui correspondent à l'angle de direction (a) et à un couple (T_{Fahrer}).

7. Procédé selon la revendication 6, **caractérisé en ce qu'**une valeur minimale est définie pour le deuxième amortissement de direction (17) de sorte que le volant (3) revient jusqu'à une position droite.

8. Procédé selon l'une quelconque des revendications précédentes, **caractérisé en ce que** la détermination de la vitesse de rappel (v_{damp}) est effectuée au moyen d'au moins une courbe caractéristique définie au préalable.

9. Procédé selon la revendication 8, **caractérisé en ce que** ladite au moins une courbe caractéristique est tridimensionnelle et présente une dépendance de l'angle de direction de volant (a) et d'une vitesse de véhicule (V_{Fahrz}).

10. Procédé selon l'une quelconque des revendications précédentes, **caractérisé en ce que** l'unité d'identification (11) exécute les étapes suivantes pour identifier l'état de maniement, consistant à :
a) établir un spectre de fréquence de signaux de déplacement qui sont détectés par des capteurs de l'actionneur à rétroaction (4),
b) analyser le spectre de fréquence tout en déterminant l'amortissement d'amplitudes de plages de fréquences prédéfinies,
c) estimer un couple de direction de conducteur au moyen d'un dispositif d'observation adéquat de l'actionneur à rétroaction, d'un modèle de l'actionneur à rétroaction (4) et des signaux de déplacement.

11. Procédé selon l'une quelconque des revendications précédentes, **caractérisé en ce que** l'unité de surveillance d'actionneur à rétroaction nécessite l'angle de direction (a) et/ou un couple de direction (T_{Fahrer}) exercé sur le volant pour calculer le couple de rappel.

12. Système de direction à commande par câble (1) pour des véhicules automobiles, comprenant un régulateur de direction (6) régulé de manière électronique en fonction d'un souhait de direction du conducteur et agissant sur les roues directrices (7), un actionneur à rétroaction (4) transmettant des réactions de la route (70) sur un volant sous la forme d'un couple de rappel, et une unité de surveillance d'actionneur à rétroaction (10) qui commande l'actionneur à rétroaction (4), une unité d'identification (11) identifiant l'état de maniement, c'est-à-dire si un contact des mains du conducteur sur le volant est avéré ou pas,
**caractérisé en ce que** l'unité de surveillance d'actionneur à rétroaction (10) est conçue pour exécuter le procédé selon l'une quelconque des revendications précédentes 1 à 11.
